## Europäisches Patentamt
## European Patent Office
## Office européen des brevets

(19)

(11) Numéro de publication: **0 164 486**
**B1**

(12)

# FASCICULE DE BREVET EUROPEEN

(45) Date de publication du fascicule du brevet: **05.12.90**

(51) Int. Cl.⁵: **F 16 C 3/00,** F 16 D 3/50

(21) Numéro de dépôt: **84870079.5**

(22) Date de dépôt: **13.06.84**

(54) Accouplement destiné à un organe rotatif.

(43) Date de publication de la demande:
**18.12.85 Bulletin 85/51**

(45) Mention de la délivrance du brevet:
**05.12.90 Bulletin 90/49**

(84) Etats contractants désignés:
**AT BE CH DE FR GB IT LI LU NL SE**

(56) Documents cités:
**AT-B- 22 545**
**AT-B- 120 284**
**BE-A- 777 174**
**BE-A- 793 304**
**BE-A- 892 404**
**DE-C- 23 527**
**FR-A- 364 769**
**FR-A- 776 041**
**FR-A-2 029 116**
**US-A-3 988 906**
**US-A-4 203 305**

(73) Titulaire: **Robbins & Myers Canada Ltd.**
**17 Woodyatt Drive**
**Brantford, Ontario (CA)**

(72) Inventeur: **Hauregard, Serge**
**rue Henri Syberg, 11**
**B-4660 Thimister (BE)**
Inventeur: **Rutten, Raoul**
**Vallée des Saules, 48**
**B-4624 Romsee (BE)**

(74) Mandataire: **De Palmenaer, Roger et al**
**Bureau Vander Haeghen 63, avenue de la Toison d'Or**
**B-1060 Bruxelles (BE)**

Courier Press, Leamington Spa, England.

**Description**

La présente invention a pour objet un accouplement pour rendre solidaires axialement et radialement et bloquer en rotation, dans une pompe volumétrique à rotor hélicoïdal, une des extrémités d'une bielle flexible à un organe rotatif (arbre moteur ou rotor), comprenant une bride d'accouplement destinée à assembler rigidement en bout, par vissage, l'organe rotatif, muni à une extrémité d'un logement central et d'un filetage hélicoïdal extérieur et un organe mâle engagé dans ledit logement par une tête de forme complémentaire à celle dudit logement et pourvu d'un filetage hélicoïdal extérieur au voisinage de ladite tête, ladite bride d'accouplement étant constituée d'un manchon à double alésage de diamètres internes différents, pourvu chacun d'un taraudage à filetage hélicoïdal de pas différents, dont l'un correspond à celui de l'organe rotatif susdit, et dont l'autre correspond à celui ménagé sur l'organe mâle susdit (voir BE—A—892404).

On connaît par le brevet français No. 2.029.116, un dispositif de ce genre, comprenant un manchon, ou fourrure, fendu, présentant un logement axial troconique dont l'alésage est sensiblement égal au diamètre d'un arbre à solidariser.

L'arbre en question présente, à une extrémité, un filetage extérieur, tandis que l'organe rotatif présente du côté filetage susdit, un collet cylindrique comprenant un taraudage de même sens que le filetage, mais de pas différent.

Les filets extérieur et intérieur de l'arbre et de l'organe rotatif sont en prise, respectivement avec les filets intérieur et extérieur du taraudage et d'un filetage d'un écrou-couronne.

La disposition de cet écrou-couronne connu rend le montage et le démontage très difficiles. En raison de sa mauvaise accessibilité, l'écrou-couronne ne peut être agrippé qu'au moyen d'une clé à ergots engagée dans des trous borgnes ménagés dans une face latérale de l'écrou. Lors du serrage, l'écrou aura tendance à se déformer sous l'action d'un couple fléchissant qui rendra le serrage plus difficile.

On connaît par FR—A—364.769 un système d'accouplement articulé pour arbres comprenant une sorte de ressort à boudin s'étendant entre deux tronçons de l'accouplement.

On connaît également par FR—A—776.041 des éléments de transmission comprenant une partie tubulaire sur laquelle sont formés des ressorts à boudin.

Ces système et éléments de transmission provoquent tous une diminution du rendement de la pompe (pertes de charges plus importantes, perturbations).

L'accouplement suivant l'invention qui est du type décrit dans le premier paragraphe du présent mémoire est essentiellement caractérisé en ce que l'organe mâle est, du côté opposé à sa tête, relié à la bielle par une boucle de flexion formée par une spire hélicoïdale unique de dimension radiale supérieure aux diamètres de la bielle et de l'organe mâle.

D'autres détails et particularités de l'invention apparaîtront au cours de la description détaillée suivante, faisant référence aux dessins annexés, qui montrent schématiquement, à titre illustratif et non limitatif, une forme de réalisation de l'invention.

Dans ces dessins:

—la figure 1 est une coupe longitudinale d'une bride d'accouplement pour un accouplement suivant l'invention;

—la figure 2 est une coupe longitudinale d'un accouplement destiné à être utilisé pour une pompe volumétrique, et;

—la figure 3 montre une boucle de flexion selon l'invention et à incorporer dans l'accouplement représenté à la figure 2.

Dans ces diverses figures, les mêmes notations de références désignent des éléments identiques ou analogues.

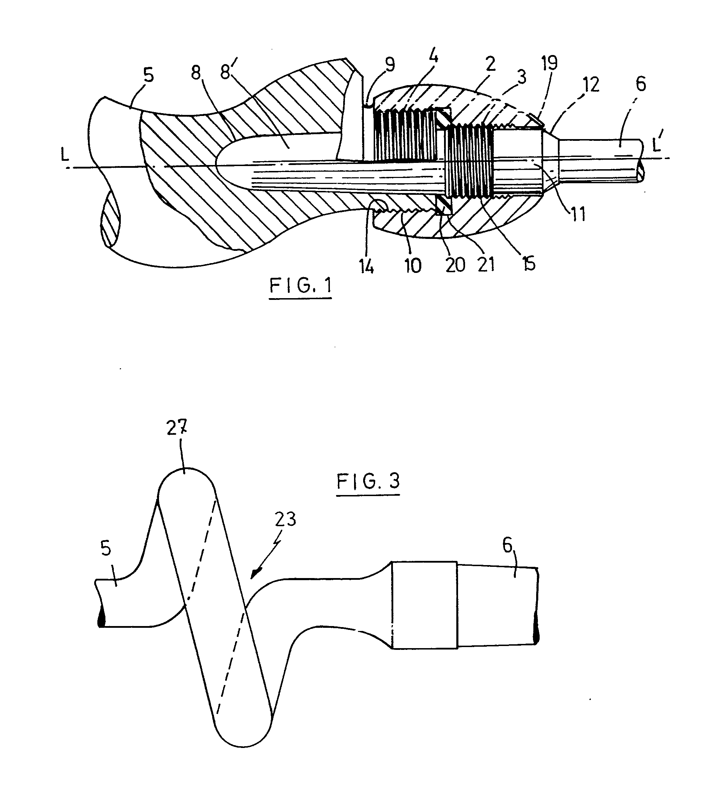

Sur la figure 1 on a représenté une bride d'accouplement. Cette bride est constituée d'un manchon d'accouplement 2 à double alésage 3, 4 et est destinée à unir rigidement un organe rotatif 5 et un organe mâle 6 disposé en bout l'un par rapport à l'autre.

Les deux organes peuvent éventuellement être excentrés. L'organe mâle 6 est alors avantageusement une bielle flexible.

Dans la forme de réalisation illustrée à la figure 1, la bride d'accouplement est prévu entre l'organe rotatif 5 tournant autour d'un axe fixe L, L' et l'organe mâle 6 disposé en dehors de l'alignement avec l'axe L,L'.

L'organe rotatif 5 comporte à son extrémité, un logement central 8 oblong, creusé le long de son axe de rotation L, L'. Le logement central 8 est muni d'une collerette cylindrique 9 portant extérieurement un filet 10.

L'organe mâle 6 présente une tête 8' constituée d'un tronçon à flancs inclinés de forme complémentaire au logement central 8 tronconique susdit de manière à s'emboîter parfaitement dans le logement 8 susdit.

Ce logement central 8 susdit a avantageusement la forme d'une paraboloïde ou d'une hyperboloïde.

Pour éviter toute amorce de rupture, l'organe mâle présente un collet cylindrique 11 pourvu d'un épaulement ou congé 12 destiné à répartir les contraintes.

Le collet cylindrique 11 est munie d'un filetage 13 de même sens que celui de l'organe rotatif, mais de pas différent.

La bride d'accouplement est un manchon 2 à double alésage 3, 4, dont les parois intérieures présentent des taraudages 14, 15 dont les sillons correspondants aux pas de filets 10, 13 susdits.

A la figure 1, l'alésage ayant le diamètre le plus petit est muni d'un filet plus fin et l'alésage présentant un diamètre plus grand est muni d'un filet plus large. L'inverse est également possible.

La rotation de la bride d'accouplement 1 dans un sens approprié, engendre un mouvement axial entre l'organe rotatif 5 et l'organe mâle 6, qui assure soit le coïncement des deux organes susdits, soit le déblocage et ensuite le retrait. Ce déplacement axial est obtenu grâce à la différence de pas entre le filet de l'organe rotatif 5 et celui de l'organe mâle 6.

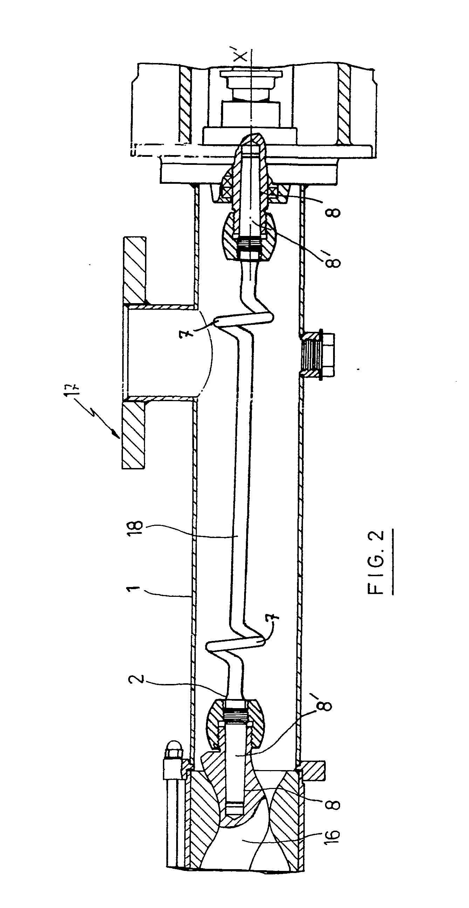

La bride d'accouplement peut être montée sur l'organe mâle en étant en prise avec ledit filetage fin porté par l'organe mâle (Figure 1). Elle peut également être montée sur l'organe rotatif en étant en prise avec ledit filetage fin porte par l'organe rotatif (Figure 2).

Lorsque la bride d'accouplement est destinée à assembler le rotor 16 d'une pompe à engrenage épicycloïdal hélicoïdal à une bielle flexible 18, comme illustré à la figure 2, on confère à cette bride d'accouplement 1 de préférence un profil aérodynamique.

Le profil aérodynamique est destiné alors à réduire la résistance de la bride d'accouplement à l'écoulement du fluide dans le corps de pompe.

La bride d'accouplement comporte au moins deux plats permettant d'agripper celle-ci à l'aide d'une clé plate.

La garniture 19 assure l'étanchéité et empêche l'auto-desserrage de la bride d'accouplement 1 lors d'une rotation dans le sens horlogique de l'ensemble.

Cette garniture 19 assure en assemblage parfait des pièces quel que soit le sens de rotation. Elle autorise cependant un déserrage aisé de la bride d'accouplement lorsqu'on utilise un outillage approprié.

Cette garniture de blocage 19 renforce en outre l'étanchéité du système et empêche toute infiltration de fluide entre l'organe rotatif et la bride d'accouplement et toute intervention de substances corrosives ou abrasives. La forme de la garniture 19 est naturellement adaptée à celle de la bride d'accouplement.

L'étanchéité peut également être obtenue par l'insertion d'un joint d'étanchéité 20 dans une gorge 21 séparant les deux alésages du manchon 2 et/ou par l'application d'une pâte teflonisée sur les filets 10, 13 des organes d'accouplement rotatif 5 et mâle 6.

Par rapport à d'autres pièces d'accouplement connues, la bride suivant l'invention présente de nombreux avantages:
—agrippage aisé à l'aide d'une clé plate;
—possibilité de retourner la bride d'accouplement sur elle-même, afin de débloquer deux organes assemblés rigidement;
—encombrement diamétral réduit;
—accès facile aux éléments d'accouplement.

L'accouplement suivant l'invention convient parfaitement dans une pompe volumétrique à rotor hélicoïdal pour réaliser l'accouplement entre ledit rotor et une bielle éventuellement flexible.

Une telle pompe comporte un corps d'aspiration ou de refoulement disposé contre un stator externe constitué généralement en caoutchouc synthétique, par exemple en Hypalon, dans lequel engrène un rotor 16. La surface interne du stator, on représenté, présente un filet ou dent hélicoïdal de plus que la surface extérieur du rotor, comme bien connu en soi. Comme le stator est en généralement en matériau polymère élastique, le rotor 16 ne tourne par autour d'un axe fixe, mais bien excentriquement par rapport à l'axe longitudinal XX' du stator, tout en restant parallèle à lui-même.

Le rotor 16 est relié à la bielle flexible 18 par l'intermédiaire de boucles de flexion 7 ou 23 qui facilitent la transmission du mouvement de rotation dans diverses directions.

Comme illustré à la figure 2, la bielle flexible 18 comporte à une de ses extrémités, une tête 8' de forme conique ou tronconique obtenue généralement par tournage et rectification. La tête 8' va en rétrécissant vers l'extrémité. La base de la tête est pourvue d'un filet extérieur 13 à pas fin. La bielle flexible 18 présente un congé destiné à éviter les concentrations de contraintes au voisinage de l'extrémité du filet.

Le rotor présente un logement 8 de forme complémentaire à celle de l'extrémité de la bielle flexible, de manière à permettre à la bielle 18 ou à une extrémité de la boucle de flexion 7 de s'emboîter parfaitement dans le logement 8 susdit.

Ce logement 8 est muni d'une collerette cylindrique 9 portant extérieurement un filet 10 dont le pas est sensiblement plus grand que le pas fin du filet 13 précité ou inversément.

Le troisième élément d'accouplement est une pièce de raccord 2 à double alésage dont les parois intérieures présentent des sillons 14 et 15 correspondants aux pas des filets susdits.

Comme la pièce de raccord 2 précitée présente dans chacun des alésages des sillons de pas différents, elle assure un serrage des cônes ou troncs de cônes 8, 8' des premier et deuxième éléments susdits emboîtés l'un dans l'autre, lorsqu'on serre cette pièce de raccord 2 sur la collerette 9 susdite.

Par sa disposition et sa forme, l'accouplement susdit n'est pas sujet à l'usure en milieu de liquide à pomper susdit, qui peut être abrasif ou corrosif.

L'encombrement diamétral réduit de ce type d'accouplement contribue à améliorer le rendement de la pompe.

La bride d'accouplement peut être utilisée pour assembler deux organes disposés dans le prolongement l'un de l'autre, éventuellement de même diamètre ou de diamètre différent, munis de filetage de pas différents.

On utilise dans l'accouplement suivant l'invention une boucle de flexion 23 présentant une forme en helice 27 (figure 3).

**Revendications**

1. Accouplement pour rendre solidaires axialement et radialement et bloquer en rotation, dans une pompe volumétrique à rotor hélicoidal, une des extrémités d'une bielle flexible à un organe rotatif (arbre moteur ou rotor), comprenant une bride d'accouplement destinée à assembler rigidement en bout, par vissage, l'organe rotatif, muni à une extrémité d'un logement central et d'un filetage hélicoïdal extérieur et un organe mâle engagé dans ledit logement par une tête de forme complémentaire à celle dudit logement et pourvu d'un filetage hélicoïdal extérieur au voisinage de ladite tête, ladite bride d'accouplement étant constituée d'un manchon (2) à double alésage (3, 4) de diamètres internes différents, pourvu chacun d'un taraudage (14, 15) à filetage hélicoïdal de pas différents, dont l'un correspond à celui de l'organe rotatif (5) susdit, et dont l'autre correspond à celui ménagé sur l'organe mâle (6) susdit, caractérisé en ce que l'organe mâle est, du côté opposé à sa tête, relié à la bielle par une boucle de flexion formée par une spire hélicoïdale unique de dimension radiale supérieure aux diamètres de la bielle et de l'organe mâle.

2. Pompe volumétrique à rotor hélicoïdal comportant un corps d'aspiration ou de refoulement disposé contre un stator dans lequel engrène un rotor (16), le rotor (16) ne tournant pas autour d'un axe fixe mais bien excentriquement par rapport à l'axe (XX') du stator, tout en restant parallèle à lui même, le rotor (16) étant relié à une bielle flexible au moyen d'un accouplement suivant la revendication 1.

**Patentansprüche**

1. Kupplung zum festen axialen und radialen Verbinden eines der Enden einer biegsamen Stange mit einem Drehorgan (Motorwelle oder Rotor) und Drehfestmachen derselben in einer Hydropumpe mit Schraubenrotor, umfassend einen Kupplungsflansch zum starren und stumpfen Andschrauben des Drehorgans, welches an einem Ende mit einer zentralen Aufnahme und einem Schraubenaußengewinde versehen ist, an einen männlichen Teil mit einem Kopf von zur Aufnahme komplementärer Gestalt, der in der Aufnahme eingesetzt und nahe beim Kopf mit einem Schraubenaußengewinde versehen ist, wobei der Kupplungsflansch durch eine Muffe (2) mit Doppelbohrung (3, 4) unterschiedlicher Innendurchmesser gebildet ist, wobei die Bohrungen jeweils mit einem Innengewinde (14, 15) mit Schraubengängen unterschiedlicher Steigungen versehen sind, von denen eines zu jenem des Drehorgans (5) und das andere zu dem am männlichen Teil (6) vorgesehenen paßt, dadurch gekennzeichnet, daß der männliche Teil auf der seinem Kopf gegenüberliegenden Seite mittels einer Biegungsschleife, welche durch eine einzige Schraubenwindung von einer höheren radialen Dimension als die Durchmesser der Stange und des männlichen Teils gebildet ist, mit der Stange verbunden ist.

2. Hydropumpe mit Schraubenrotor, umfassend einen Ansaugoder Verdrängungskörper, der an einem Stator angeordnet ist, in welchen ein Rotor (16) eingreift, welcher Rotor (16) sich nicht um eine feststehende Achse, sondern exzentrisch in bezug auf die Achse (XX') des Stators dreht, dabei aber parallel dazu bleibt, wobei der Rotor (16) mittels einer Kupplung nach Anspruch 1 mit einer biegsamen Stange verbunden ist.

**Claims**

1. Coupling apparatus, in a positive displacement pump with a helicoid rotor, for making one end of a flexible connecting rod axially and radially integral with, and for locking the end in rotation with, a rotating element (drive shaft or rotor), the coupling apparatus comprising a coupling flange for rigid attachment at the end thereof, by threaded joints, to the rotating element, the rotating element being provided at one end of a central housing and having an outer helicoid threading and a male element, engaged in the said housing by a head of a shape which is complementary to that of the said housing and provided with an outer helicoid threading in the region of the said head, the said coupling flange being formed by a sleeve (2) with twin bores (3, 4) of different internal diameters, each bore being provided with an internal screw thread (14, 15) with a helicoid threading of a different pitch, one of these pitches corresponding to that of the aforesaid rotating element (5), and the other of these pitches corresponding to that which is provided on the aforesaid male element (6), characterised in that the male element is, on the side opposite its head, connected to the connecting rod by a flexion loop formed by a single helicoid turn with a radial dimension greater than the diameters of the connecting rod and the male element.

2. Positive displacement pump with a helicoid rotor, the pump comprising a suction or delivery body arranged against a stator in which there engages a rotor (16), the rotor (16) rotating not about a fixed axis but in fact eccentrically in relation to the axis (XX') of the stator while remaining parallel thereto, the rotor (16) being connected to a flexible connecting rod by means of a coupling means according to claim 1.

FIG. 1

FIG. 3

FIG. 1

FIG. 3

FIG. 2